# EUROPEAN PATENT APPLICATION

(11) **EP 2 426 790 A1**
(43) Date of publication of application: **07.03.2012**
(21) Application number: 11006966.3
(22) Date of filing: 25.08.2011
(51) Int. Cl.: H01R 13/627

(54) **Connector and connector assembly**

(30) Priority: 03.09.2010 JP 2010197649
(71) Applicant: Sumitomo Wiring Systems, Ltd., Yokkaichi-city, Mie 510-8503 (JP)
(72) Inventor: Suzuki, Masakazu, Yokkaichi-City Mie 510-8503 (JP); Sakurai, Toshikazu, Yokkaichi-City Mie 510-8503 (JP)
(74) Representative: Müller-Boré & Partner Patentanwälte

(57) **Abstract**

An object of the present invention is to provide good operation feeling even when a connecting operation is performed with a lock arm left resiliently deformed.

In the process of connecting two housings 10, 30, a lock arm 36 is resiliently deformed in an unlocking direction crossing a connecting direction of the two housings 10, 30 by sliding in contact with a guiding surface 17 of a lock portion 16. The guiding surface 17 includes a first guiding surface 17A arranged in a front area in the connecting direction to the second housing 30 and a second guiding surface 17B arranged in an area behind the first guiding surface 17A in the connecting direction to the second housing 30 and having a steep area 22 whose angle of inclination with respect to the connecting direction of the two housings 10, 30 is larger than that of the first guiding surface 17A.

## Description

The present invention relates to a connector and to a connector assembly.

Japanese Unexamined Patent Publication No. 2008-130324 discloses such a connector that a first housing including a lock portion and a second housing connectable to the first housing and including a resiliently deformable lock arm are provided, the lock arm is resiliently deformed due to interference with the lock portion in the process of connecting the two housings, and the lock arm resiliently returns to be engaged with the lock portion, thereby locking the two housings in a connected state, when the two housings reach a properly connected state.

The lock portion is formed with a guiding surface inclined with respect to a connecting direction of the two housings, and the lock arm is resiliently deformed by sliding in contact with the guiding surface in the process of connecting the two housings. Upon unlocking the two housings, an operating portion formed on the lock arm is pressed to resiliently deform the lock arm and disengage it from the lock portion.

Upon connecting the two housings, an operator may press the operating portion by mistake to resiliently deform the lock arm when holding the second housing and start a connecting operation in this state. In this case, the operating portion is not intentionally pressed for unlocking purpose. Thus, a resiliently deforming amount of the lock arm is smaller than a deforming amount necessary for unlocking, and the lock arm comes into contact with an intermediate part of the guiding surface during the connecting operation.

The lock arm resiliently returns after being more resiliently deformed while sliding in contact with the guiding surface. Since the resiliently deforming amount of the lock arm during the slide contact with the guide surface is smaller than the resiliently deforming amount when the connecting operation is properly started without the lock arm being resiliently deformed, a variation of connection resistance (how it increases) resulting from the resilient deformation of the lock arm is also small. The operator feels the progress of the connecting operation based on the variation of the connection resistance resulting from the resilient deformation of the lock arm. The larger the variation of the connection resistance is, the more easily the progress of the connecting operation is felt and the more operation feeling is improved.

Accordingly, with the connector disclosed in Japanese Unexamined Patent Publication No. 2008-130324, a variation of connection resistance is small when a connecting operation is performed with the lock arm left resiliently deformed. Thus, there is a problem of poor operation feeling.

The present invention was developed in view of the above situation and an object thereof is to provide good operation feeling even when a connecting operation is performed with a lock arm left resiliently deformed.

This object is solved according to the invention by the features of the independent claims. Specific embodiments of the invention are subject of the dependent claims.

According to one aspect of the invention, there is provided a connector, comprising a first housing connectable along a connecting direction to a second housing of a mating connector and including a lock portion to engage a lock arm provided at the second housing; wherein: the lock portion is formed with a guiding surface inclined with respect to the connecting direction of the two housings so that the lock arm is resiliently deformed in an unlocking direction crossing the connecting direction of the two housings by sliding in contact with the guiding surface in the process of connecting the two housings; and the guiding surface includes a first guiding surface arranged in a front area in the connecting direction to the second housing and a second guiding surface arranged in an area behind the first guiding surface in the connecting direction to the second housing and having a steep area whose angle of inclination with respect to the connecting direction of the two housings is larger than an angle of inclination of the first guiding surface.

According to a particular embodiment, an outer or upper surface of the lock portion substantially is a flat surface parallel to the connecting direction.

Particularly, the angle of inclination of the first guiding surface with respect to the connecting direction is less than about 45°.

Further particularly, a front end of the second guiding surface is directly connected to the rear end of the first guiding surface and/or a rear end of the second guiding surface is directly connected to the upper surface of the lock portion.

Further particularly, the second guiding surface comprises a steep slant and an arcuate or bent surface.

Further particularly, the arcuate or bent surface comprises a steeply curved surface and a moderately curved surface, wherein the steeply curved surface is an area of the arcuate surface where an angle of inclination of a tangent to the steeply curved surface with respect to the connecting direction is larger than the inclination angle of the first guiding surface.

Further particularly, a curvature of the steeply curved surface is constant over the entire area of the steeply curved surface and/or the front end of the steeply curved surface is tangentially connected to the steep slant.

Further particularly, the moderately curved surface is an area of the arcuate surface where an angle of inclination of a tangent to the moderately curved surface with respect to the connecting direction is smaller than the inclination angle of the first guiding surface.

Further particularly, a curvature of the moderately curved surface is constant over the entire area of the moderately curved surface and/or equal to that of the steeply curved surface.

Further particularly, a front end of the moderately curved surface is tangentially connected to the rear end of the steeply curved surface, and/or wherein a rear end of the moderately curved surface is tangentially connected to the upper surface of the lock portion.

According to a further aspect of the invention, there is provided a connector assembly comprising a connector according to the above aspect of the invention or a particular embodiment thereof and a mating connector connectable therewith along a connecting direction, wherein: a lock arm is provided on the second housing and is resiliently deformable in an unlocking direction crossing the connecting direction; and the lock arm resiliently returns towards a lock position to be engaged with the lock portion, thereby locking the two housings in a connected state, when the two housings reach a properly connected state.

According to a particular embodiment, an operating portion is formed on the lock arm to be pressed upon for unlocking the two housings, whereby the lock arm is resiliently deformed in the unlocking direction to be disengaged from the lock portion.

Particularly, in the process of connecting the two housings, a slide-contact area of the second guiding surface with the lock arm is only a steep area.

Further particularly, the lock arm is formed with a locking hole or recess, a part of the lock arm before the locking hole serves as a slide-contact portion, and a rear surface of the slide-contact portion serves as a locking surface substantially perpendicular to the connecting direction.

Further particularly, with the lock arm located at a lock position, an angle of inclination of a slide-contact slant of the slide-contact portion with respect to the connecting direction is larger than the angle of inclination of the first guiding surface and/or smaller than the angle of inclination of the steep slant, wherein the angle of inclination of the slide-contact slant preferably is less than about 50°.

According to a further specific embodiment, there is provided a connector assembly, comprising a first housing including a lock portion; a second housing connectable to the first housing; and a lock arm provided on the second housing and resiliently deformable in a direction crossing a connecting direction to the first housing; wherein the lock portion is formed with a guiding surface inclined with respect to the connecting direction of the two housings; the lock arm is resiliently deformed in an unlocking direction crossing the connecting direction of the two housings by sliding in contact with the guiding surface in the process of connecting the two housings; the lock arm resiliently returns to a lock position to be engaged with the lock portion, thereby locking the two housings in a connected state, when the two housings reach a properly connected state; an operating portion formed on the lock arm is pressed upon unlocking the two housings, whereby the lock arm is resiliently deformed in the unlocking direction to be disengaged from the lock portion; and the guiding surface includes a first guiding surface arranged in a front area in the connecting direction to the second housing and a second guiding surface arranged in an area behind the first guiding surface in the connecting direction to the second housing and having a steep area whose angle of inclination with respect to the connecting direction of the two housings is larger than that of the first guiding surface.

If a connecting operation is performed with the operating portion pressed and the lock arm resiliently deformed, the lock arm comes into contact with the second guiding surface without touching the first guiding surface. Since the second guiding surface has a relatively large angle of inclination with respect to the connecting direction of the two housings, connection resistance suddenly increases due to the contact of the lock arm with the second guiding surface and also in the process of the lock arm sliding in contact with the second guiding surface. Since an operator can clearly feel the progress of the connecting operation by this sudden variation of the connection resistance, good operation feeling can be obtained even when the connecting operation is performed with the lock arm left resiliently deformed.

If the two housings are connected without the lock arm being resiliently deformed, the lock arm slides in contact with the first guiding surface and, thereafter, slides in contact with the second guiding surface to increase a resiliently deforming amount. Also in this case, good operation feeling can be obtained since the connection resistance suddenly increases in the process of the lock arm sliding in contact with the second guiding surface.

In the present invention, out of the outer surfaces of the lock portion, a surface on the front side facing the second housing during the connecting operation and oblique to the connecting direction of the two housings is defined as the guiding surface and areas with which the lock arm does not come into direct contact in the process of connecting the two housings are also included in the guiding surface.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section showing an intermediate state of a connecting operation of a first housing and a second housing in one embodiment,
FIG. 2 is a section showing an intermediate state of the connecting operation of the first and second housings advanced from the state shown in FIG. 1,
FIG. 3 is a section showing a state where the connecting operation of the first and second housings is completed,
FIG. 4 is a partial enlarged view of FIG. 1,
FIG. 5 is a partial enlarged view of FIG. 2,
FIG. 6 is a front view of the first housing,
FIG. 7 is a plan view of the first housing,
FIG. 8 is a front view of the second housing, and
FIG. 9 is a plan view of the second housing.

### <One Embodiment>

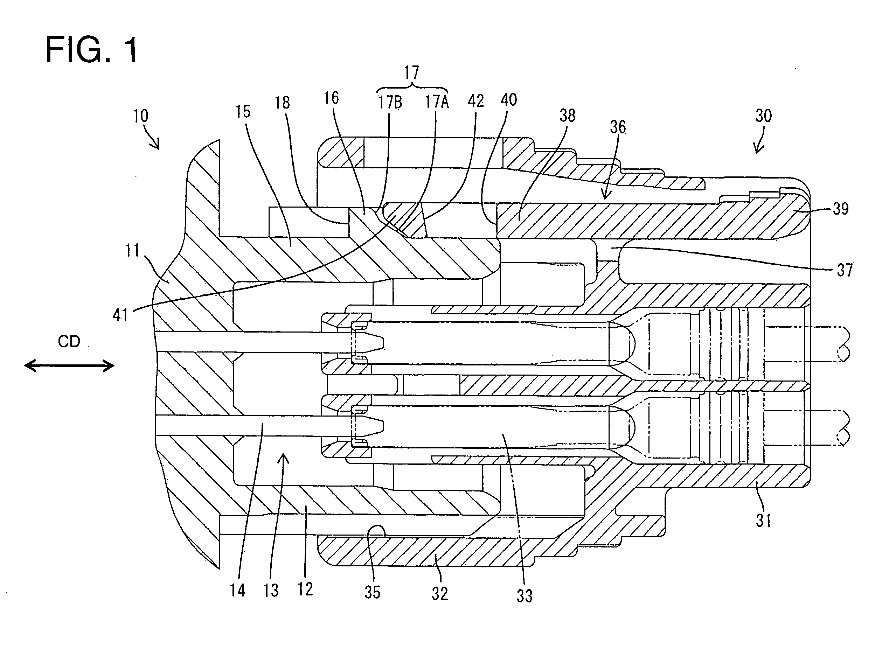

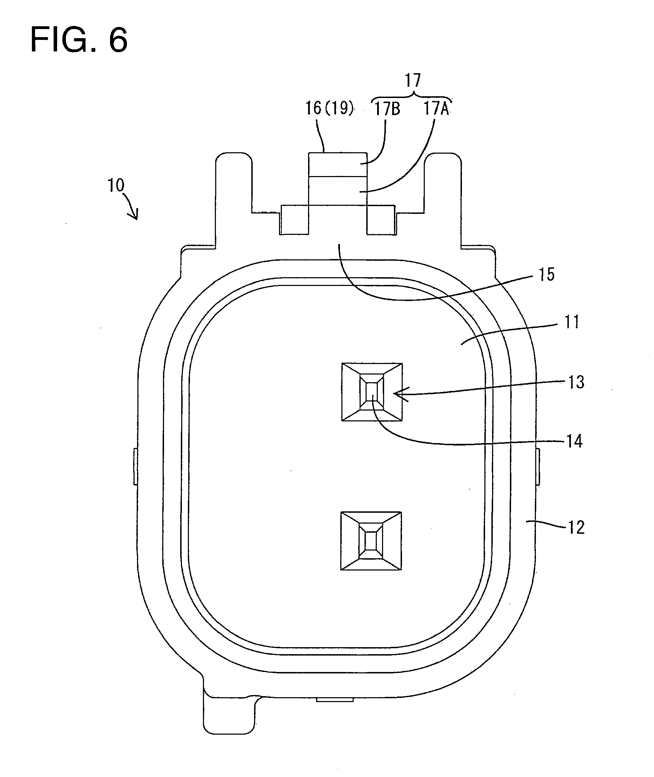

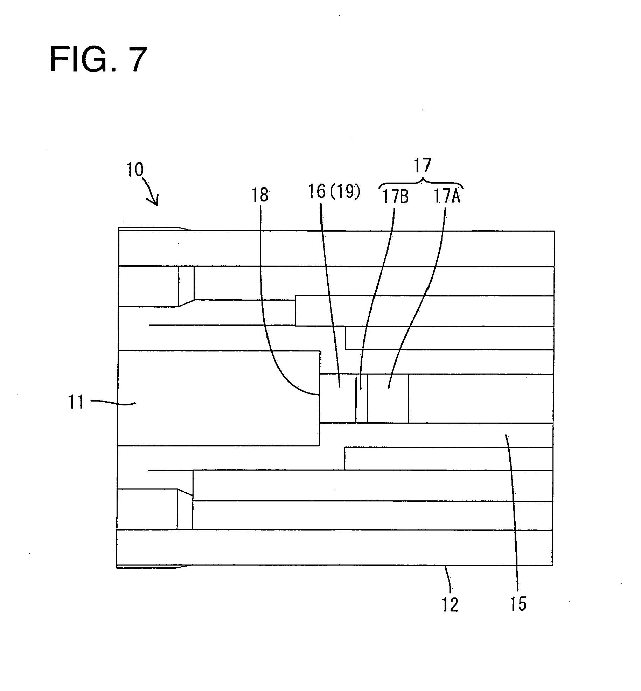

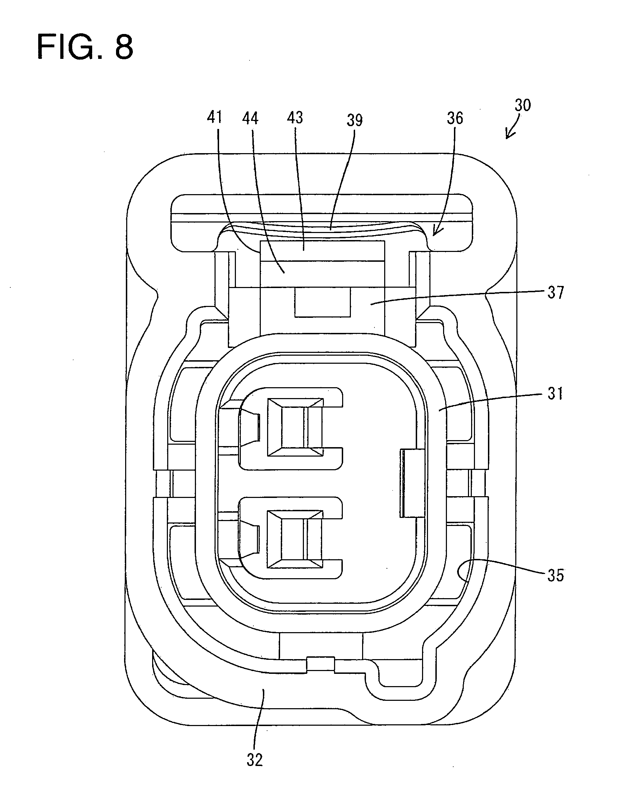

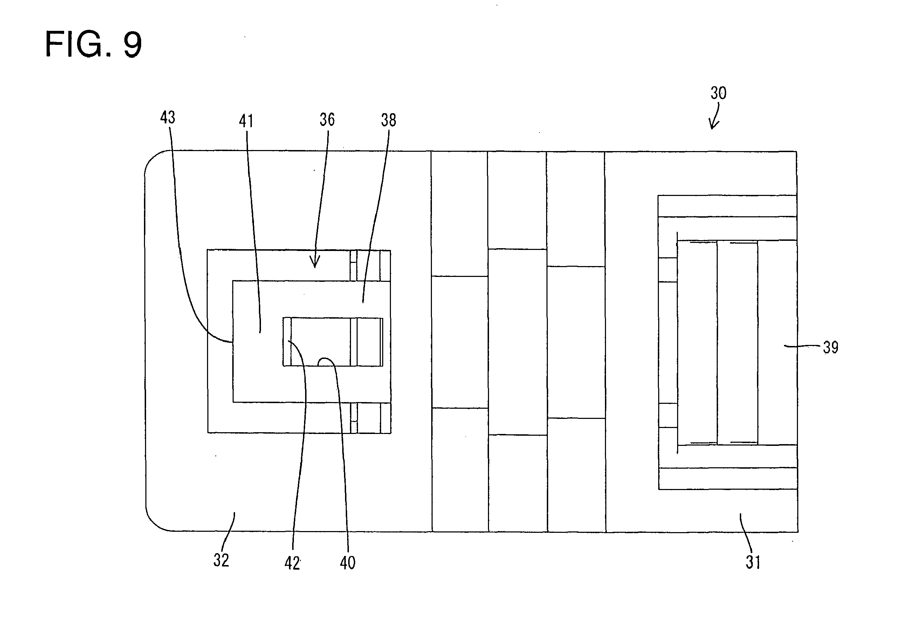

Hereinafter, one specific embodiment of the present invention is described with reference to FIGS. 1 to 9. As shown in FIGS. 1 to 3, a connector of this embodiment is provided with a first housing 10 and a second housing 30 connectable to the first housing 10.

As shown in FIGS. 1 to 3, 6 and 7, the first housing 10 includes a terminal holding portion 11 and a receptacle 12 (particularly substantially in the form of a rectangular or polygonal tube) extending from the outer periphery of the front end (right end in FIGS. 1 to 3) of the terminal holding portion 11. One or more, particularly a plurality of male terminal fittings 13 are held in the terminal holding portion 11, and one or more tabs 14 at the respective leading ends of the one or more terminal fittings 13 substantially project forward from the terminal holding portion 11 to be at least partly surrounded by the receptacle 12.

The receptacle 12 particularly is made up of four plate portions. The upper surface (outer surface) of an upper plate portion 15 out of these plate portions particularly is a flat surface parallel to a connecting direction CD of the two housings 10, 30 (hereinafter, referred to as a connecting direction CD), and the upper plate portion 15 is integrally or unitarily formed with a lock portion 16 projecting upward (outward of the receptacle 12) from the upper surface. The front surface (right surface in FIGS. 1 to 5 substantially facing the second housing 30 at the time of connecting the two housings 10, 30) of the lock portion 16 serves as a guiding surface 17 for resiliently deforming a lock arm 36 to be described later in an unlocking or deflection direction UD in the process of connecting the two housings 10, 30 along the connecting direction CD. The rear surface (left surface in FIGS. 1 to 5 opposite to the front surface) of the lock portion 16 serves as a lock surface 18 substantially perpendicular to the connecting direction CD. An upper or outer surface 19 of the lock portion 16 particularly substantially is a flat surface parallel to the connecting direction CD.

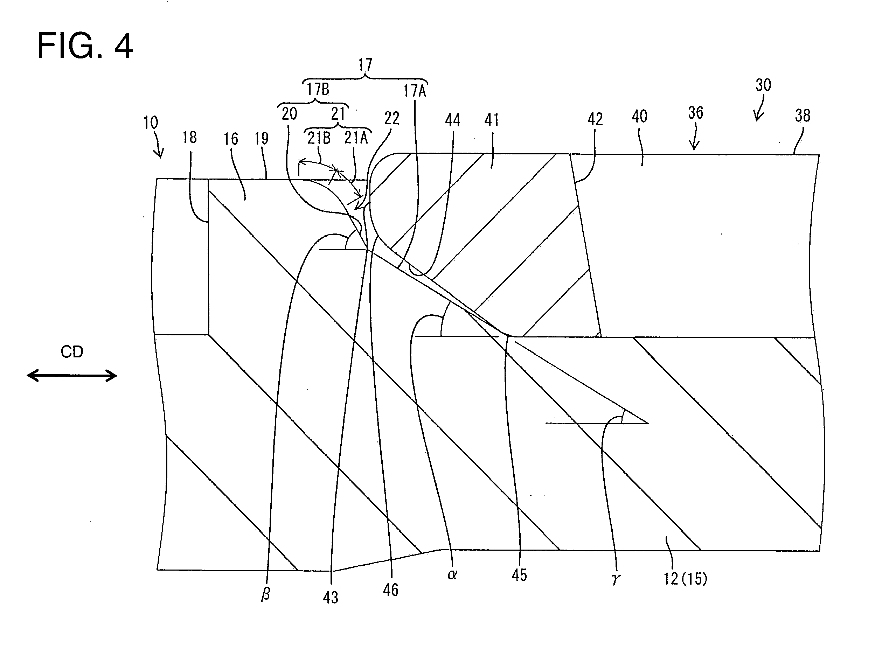

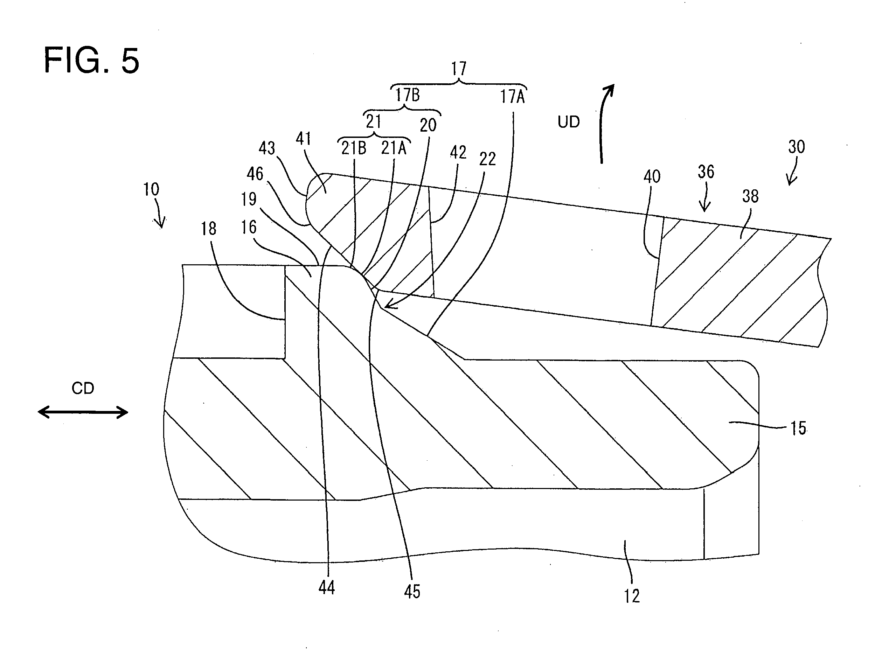

As enlargedly shown in FIGS. 4 and 5, the guiding surface 17 is composed of or comprises a first guiding surface 17A and a second guiding surface 17B. The first guiding surface 17A particularly substantially is a flat surface formed in a front area of the guiding surface 17 in the connecting direction CD to the second housing 30 (right area in FIGS. 4 and 5) and an angle of inclination α of the first guiding surface 17A with respect to the connecting direction CD is less than about 45° (particularly about 30° in this embodiment). A formation range or projecting distance of the first guiding surface 17A in a vertical or radially outward direction (projecting direction of the lock portion 16 from the upper plate portion 15, perpendicular to the connecting direction CD) is less than about 2/3 (particularly about 1/2) of the entire height area or projecting distance of the lock portion 16. The front end of this first guiding surface 17A is connected at an obtuse angle to the upper plate portion 15 of the receptacle 12.

The second guiding surface 17B is arranged in an area behind the first guiding surface 17A in the connecting direction CD to the second housing 30, the front end thereof particularly is directly connected to the rear end of the first guiding surface 17A and/or the rear end thereof particularly is directly connected to the upper surface 19 of the lock portion 16. This second guiding surface 17B has a steep area 22 with an angle of inclination β with respect to the connecting direction CD larger than that angle α of the first guiding surface 17A. The second guiding surface 17B particularly is composed of a steep slant 20 and an arcuate or bent surface 21.

The steep slant 20 particularly is a flat surface with an angle of inclination β with respect to the connecting direction CD larger than that of the first guiding surface 17A, and an angle of inclination β of the steep slant 20 is more than about 45° (particularly about 60° in this embodiment). The front end of the steep slant 20 is connected at an obtuse angle to the rear end of the first guiding surface 17A, and an area of the guiding surface 17 where the first guiding surface 17A and the steep slant 20 are formed is indented. A formation area or projecting distance of the steep slant 20 in the vertical direction is more than about 1/3 (particularly about 1/2) of the entire height area of the second guiding surface 17B.

The arcuate or bent surface 21 particularly is composed of a steeply curved surface 21 A and a moderately curved surface 21B. The steeply curved surface 21 A is an area of the arcuate surface 21 where an angle of inclination of a tangent (not shown) to the steeply curved surface 21 A with respect to the connecting direction is larger than the angle of inclination α of the first guiding surface 17A. A curvature of the steeply curved surface 21 A particularly is constant over the entire area of the steeply curved surface 21 A and/or the front end thereof particularly is tangentially (moderately) connected to the steep slant 20.

On the other hand, the moderately curved surface 21B is an area of the arcuate surface 21 where an angle of inclination of a tangent (not shown) to the moderately curved surface 21B with respect to the connecting direction CD is smaller than the angle of inclination α of the first guiding surface 17A. A curvature of the moderately curved surface 21B at least partly is constant over the entire area of the moderately curved surface 21B and/or equal to that of the steeply curved surface 21A. The front end of the moderately curved surface 21B particularly is tangentially (moderately) connected to the rear end of the steeply curved surface 21 A, and/or the rear end thereof particularly is tangentially (moderately) connected to the upper surface 19 of the lock portion 16.

As described above, the area of the second guiding surface 17B including the steep slant 20 and the steeply curved surface 21A is a steep area 22 with an angle of inclination β with respect to the connecting direction CD larger than that (α) of the first guiding surface 17A. In the process of connecting the two housings 10, 30, a slide-contact area of the second guiding surface 17B with the lock arm 36 is only the steep area 22.

In this embodiment, out of the outer surfaces of the lock portion 16, a surface on the front side facing the second housing 30 during the connecting operation and oblique to the connecting direction CD is defined as the guiding surface 17 and areas with which the lock arm 36 does not come into direct contact in the process of connecting the two housings 10, 30 are also included in the guiding surface 17.

As shown in FIGS. 1 to 3, 8 and 9, the second housing 30 includes a (particularly substantially block-shaped) terminal accommodating portion 31 and a tubular fitting portion 32 connected to (particularly the outer periphery of) the terminal accommodating portion 31, substantially extending forward (leftward in FIGS. 1 to 3) particularly in a cantilever manner and/or at least partly surrounding the terminal accommodating portion 31 (particularly substantially over the entire circumference). At the time of connecting the two housings 10, 30, the terminal accommodating portion 31 is at least partly fitted into the receptacle 12. One or more, particularly a plurality of female terminal fittings 33 are at least partly accommodated in the terminal accommodating portion 31, and entrance openings for allowing the respective tabs 14 to at least partly enter the terminal accommodating portion 31 for connection with the female terminal fittings 33 when the two housings 10, 30 are connected are formed in the front surface of the terminal accommodating portion 31. A connection space 35 which substantially is open forward and into which the receptacle 12 is at least partly fitted at the time of connecting the two housings 10, 30 is formed between the terminal accommodating portion 31 and the tubular fitting portion 32.

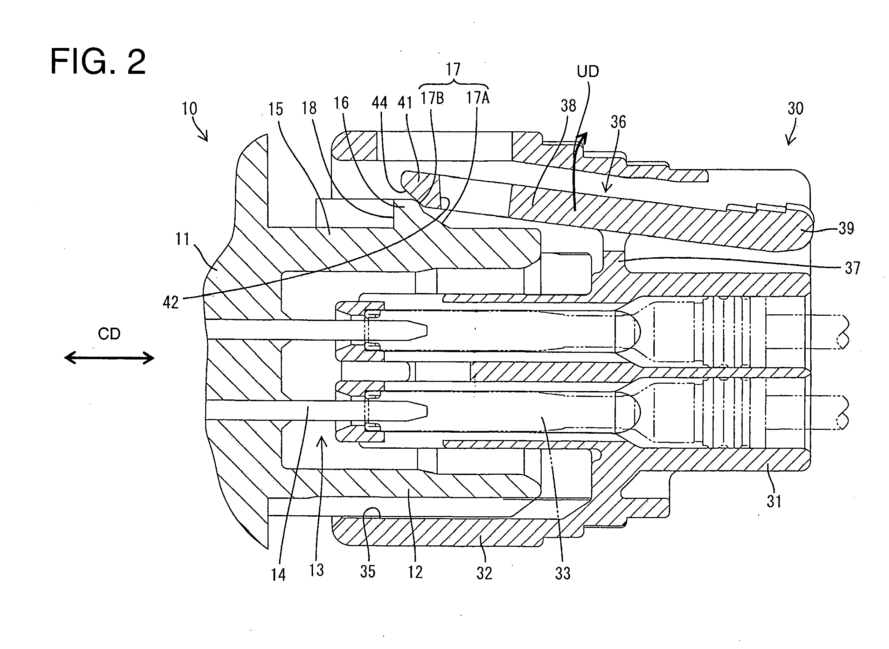

The lock arm 36 is at least partly accommodated in an outer or upper part of the connection space 35 substantially facing the upper or outer surface of the terminal accommodating portion 31 and an upper or outer wall portion of the tubular fitting portion 32. The lock arm 36 is an integral or unitary assembly of a supporting portion 37 projecting upward or outward from the upper surface (outer surface) of the terminal accommodating portion 31, an arm portion 38 substantially extending forward (or substantially along the connecting direction CD) in a cantilever manner from the upper end (projecting or distal end) of the supporting portion 37 and an operating portion 39 substantially extending backward in a cantilever manner from the upper end of the supporting portion 37. The lock arm 36 is normally held at a lock position shown in FIGS. 1, 3 and 4 due to the rigidity of the lock arm 36 itself and resiliently deformable in an unlocking direction UD (intersecting the connecting direction CD) substantially like a seesaw with the upper end of the supporting portion 37 as a supporting point as shown in FIGS. 2 and 5.

When the lock arm 36 is held at the lock position, an extending direction of the arm portion 38 and that of the operating portion 39 are both substantially parallel to the connecting direction CD, and the arm portion 38 and the operating portion 39 are connected in a straight line. With the lock arm 36 resiliently deformed in the unlocking direction UD, the arm portion 38 and the operating portion 39 are oblique to the connecting direction CD, a front end portion of the arm portion 38 is displaced upward or outward (direction crossing the connecting direction CD and away from the terminal accommodating portion 31), and the operating portion 39 is displaced downward or inward.

The arm portion 38 of the lock arm 36 is formed with a locking hole or recess 40 penetrating in the vertical direction. A part of the arm portion 38 before the locking hole 40, i.e. a front end portion of the receptacle 12, serves as a slide-contact portion 41. The rear surface of the slide-contact portion 41 (i.e. front inner surface of the locking hole 40) serves as a locking surface 42 substantially perpendicular to the connecting direction CD. As enlargedly shown in FIGS. 4 and 5, an upper (displacing direction at the time of unlocking) area of the front surface (surface facing the first housing 10 and the guiding surface 17 at the time of connecting the two housings 10, 30) of the slide-contact portion 41 serves as a facing surface 43 substantially perpendicular to the connecting direction CD. A lower area of the front surface of the slide-contact portion 41 serves as a slide-contact slant 44 which particularly is a flat surface inclined with respect to the connecting direction CD. The slide-contact slant 44 and the lower surface of the arm portion 38 (slide-contact portion 41) are at an obtuse angle and are moderately connected via a slide-contact curved surface 45. Further, the slide-contact slant 44 and the facing surface 43 particularly are tangentially (moderately) connected via an arcuate or bent surface 46.

As shown in FIG. 4, with the lock arm 36 located at the lock position, an angle of inclination γ of the slide-contact slant 44 with respect to the connecting direction CD is less than about 50° (particularly about 35° in this embodiment). The angle of inclination γ of this slide-contact slant 44 is larger than the angle of inclination α of the first guiding surface 17A and/or smaller than the angle of inclination β of the steep slant 20 (i.e. maximum angle of inclination in the steep area 22). Further, with the lock arm 36 located at the lock position, a formation area of the slide-contact slant 44 in the vertical direction is larger than that of the first guiding surface 17A. Accordingly, as shown in FIG. 4, the upper end of the slide-contact slant 44 is higher than that of the first guiding surface 17A and located at a height corresponding to the steep slant 20 when the lower surface of the arm portion 38 is in contact with or proximately facing the upper surface of the upper plate portion 15 of the receptacle 12.

Next, functions of this embodiment are described. When the receptacle 12 is at least partly fitted into the connection space 35 in the process of connecting the two housings 10, 30, the slide-contact curved surface 45 or the bottom end of the slide-contact slant 44 comes into contact with the front end (bottom end) of the first guiding surface 17A as shown in FIGS. 1 and 4. At this time, the slide-contact slant 44 touches neither the first guiding surface 17A nor the second guiding surface 17B and is spaced apart from the both guiding surfaces 17A, 17B. Further, the facing surface 43 and the arcuate surface 46 particularly are spaced apart from the second guiding surface 17B.

As the connecting operation progresses from this state, the slide-contact curved surface 45 slides in contact with the first guiding surface 17A and, accordingly, the lock arm 36 is resiliently deformed in the unlocking direction UD. At this time, connection resistance resulting from the contact of the first guiding surface 17A and the slide-contact curved surface 45 is relatively small since the angle of inclination α of the first guiding surface 17A with respect to the connecting direction CD is relatively small. During this time, the arcuate surface 46 approaches the second guiding surface 17B and the angle of inclination of the slide-contact slant 44 with respect to the connecting direction gradually increases.

When the connecting operation further progresses and the slide-contact curved surface 45 reaches an intermediate part of the first guiding surface 17A, the slide-contact slant 44 comes into contact with the steeply curved surface 21 A. Thereafter, as the connecting operation progresses, the slide-contact curved surface 45 is separated from the first guiding surface 17A, the slide-contact slant 44 slides in contact with the steeply curved surface 21 A, and the lock arm 36 is further resiliently deformed in the unlocking direction UD due to the slide contact as shown in FIG. 5. Since the angle of inclination of the steeply curved surface 21 A is larger than the angle of inclination α of the first guiding surface 17A, connection resistance resulting from the slide contact of the slide-contact slant 44 and the steeply curved surface 21 A suddenly increases when a slide-contact area of the lock arm 36 on the guiding surface 17 transitions from the first guiding surface 17A to the steep area 22. Since a change amount of the resilient deformation of the lock arm 36 also suddenly increases, connection resistance resulting from a resilient restoring force of the lock arm 36 also suddenly increases. These sudden increases (variations) in the connection resistance are good indicators for an operator to sense the progress of the connecting operation.

After the slide-contact slant 44 passes the steeply curved surface 21 A, the slide-contact curved surface 45 slides in contact with the steeply curved surface 21 A. The slide-contact curved surface 45 comes to slide in contact with the moderately curved surface 21B after passing the steeply curved surface 21A. Thereafter, the slide-contact portion 41 of the lock arm 36 slides successively in contact with the moderately curved surface 21B and the upper surface 19 of the lock portion 16. Since the angle inclination of the moderately curved surface 21B with respect to the connecting direction CD particularly is relatively small (i.e. smaller than the angle of inclination α of the first guiding surface 17A) and/or the upper surface 19 of the lock portion 16 substantially is parallel to the connecting direction CD, connection resistance resulting from the slide contact of the lock arm 36 is small. Further, since the resiliently deforming amount of the lock arm 36 hardly varies while the slide-contact portion 41 slides in contact with the moderately curved surface 21B and the upper surface 19 of the lock portion 16, the connection resistance will not increase due to an increase in the resiliently deforming amount of the lock arm 36. Thus, the connecting operation of the two housings 10, 30 progresses at once and the two housings 10, 30 reliably reach a properly connected state.

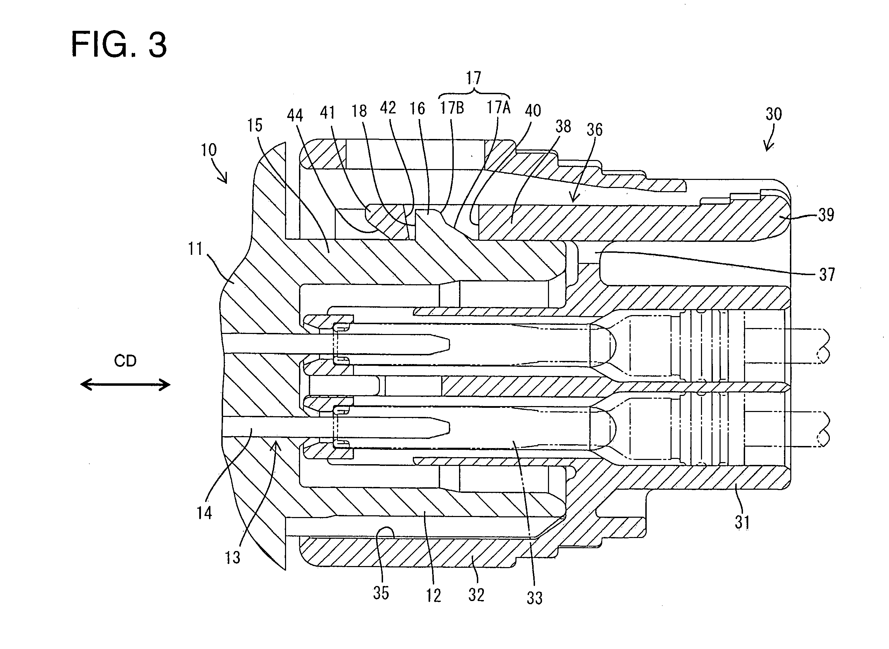

When the two housings 10, 30 reach the properly connected state, the slide-contact portion 41 completely passes the lock portion 16 as shown in FIG. 3, wherefore the lock arm 36 resiliently returns towards or to the lock position, the locking hole or recess 40 is engaged with the lock portion 16, and the lock surface 18 and the locking surface 42 proximately face each other so as to be engageable with each other. By this locking action of the lock portion 16 and the lock arm 36, the two housings 10, 30 are locked in the properly connected state.

Upon separating the two housings 10, 30 locked in the connected state, the upper surface of the operating portion 39 is pressed to resiliently deform the lock arm 36 in the unlocking direction UD and bring the locking hole 40 above the lock portion 16. Since the locked state of the lock portion 16 and the lock arm 36 is canceled in this way, the two housings 10, 30 may be, thereafter, pulled and separated from each other with this unlocked state maintained.

In the above described case, the two housings 10, 30 are connected without the operator touching the lock arm 36, i.e. with the lock arm 36 held at the lock position. However, upon connecting the two housings 10, 30, the operator may press the operating portion 39 by mistake to resiliently deform the lock arm 36 in the unlocking direction UD when holding the second housing 30 and start the connecting operation in this state. In this case, since the operating portion 39 is not intentionally pressed for unlocking purpose, the resiliently deforming amount of the lock arm 36 is smaller than necessary for unlocking and the lock arm 36 comes into contact with an intermediate part of the guiding surface 17 during the connecting operation as shown in FIGS. 2 and 5.

That is, the slide-contact slant 44 of the lock arm 36 comes into contact with the steeply curved surface 21 A of the second guiding surface 17B without touching the first guiding surface 17A. In other words, this steeply curved surface 21 A becomes an area of the guiding surface 17 with which the lock arm 36 first comes into contact. Since the resiliently deforming amount of the lock arm 36 does not vary until the slide-contact slant 44 comes into contact with the steeply curved surface 21 A, an increase in connection resistance resulting from a variation (sudden increase) of the resilient deforming amount of the lock arm 36 is not felt by the operator.

When the slide-contact slant 44 comes into contact with the steeply curved surface 21 A, the connection resistance increases at once. That is, since the angle of inclination of the steeply curved surface 21A with respect to the connecting direction CD is relatively large, the connection resistance suddenly increases the moment the slide-contact slant 44 slides in contact with the steeply curved surface 21 A and also suddenly increases due to the slide contact of the slide-contact slant 44 with the steeply curved surface 21A. Further, since the resiliently deforming amount of the lock arm 36 particularly also suddenly increases due to the slide contact of the slide-contact slant 44 and the steeply curved surface 21 A, the connection resistance also suddenly increases due to this increase in the resiliently deforming amount.

The operator can clearly feel the progress of the connecting operation (i.e. contact of the lock arm 36 with the lock portion 16) because of these sudden increases in the connection resistance. In this way, according to this embodiment, good operation feeling can be obtained even when the connecting operation is performed with the lock arm 36 left resiliently deformed.

Accordingly, to provide good operation feeling even when a connecting operation is performed with a lock arm left resiliently deformed, iln the process of connecting two housings 10, 30, a lock arm 36 is resiliently deformed in an unlocking direction UD crossing a connecting direction CD of the two housings 10, 30 by sliding in contact with a guiding surface 17 of a lock portion 16. The guiding surface 17 includes a first guiding surface 17A arranged in a front area in the connecting direction CD to the second housing 30 and a second guiding surface 17B arranged in an area behind the first guiding surface 17A in the connecting direction CD to the second housing 30 and having a steep area 22 whose angle of inclination with respect to the connecting direction CD of the two housings 10, 30 is larger than that of the first guiding surface 17A.

### <Other Embodiments>

The present invention is not limited to the above described and illustrated embodiment. For example, the following embodiments are also included in the technical scope of the present invention.
(1) Although the first guiding surface particularly substantially is a flat surface and/or the angle of inclination thereof with respect to the connecting direction of the two housings particularly is substantially constant over the entire area of the first guiding surface in the above embodiment, the angle of inclination of the first guiding surface may not be constant over the entire area. In this case, the entire or partial area of the first guiding surface may be a curved surface.
(2) Although the curvature of the arcuate surface of the second guiding surface particularly is substantially constant over the entire area in the above embodiment, the arcuate or bent surface may be formed such that the curvature thereof changes in a sliding contact direction of the lock arm (forward and backward directions).
(3) Although only a part of the second guiding surface particularly is an arcuate or bent surface and/or the angle of inclination of this arcuate or bent surface with respect to the connecting direction of the two housings gradually changes in the sliding contact process of the lock arm in the above embodiment, the entire area of the second guiding surface may be an arcuate or bent surface or a substantially flat surface with a substantially constant angle of inclination. When the entire area of the second guiding surface is an arcuate or bent surface, the curvature thereof may or may not be constant over the entire area of the second guiding surface.
(4) Although the first guiding surface and the outer surface of the first housing (upper surface of the upper wall portion) particularly are connected at an obtuse angle in the above embodiment, they may be smoothly connected by a curved surface.
(5) Although the guiding surface particularly is formed by connecting the first and second guiding surfaces in the connecting direction of the two housings in the above embodiment, the first and second guiding surfaces of the guiding surface may be separated at front and rear sides via a surface parallel to the connecting direction of the two housings.
(6) Although the lock arm particularly slides in contact only with the arcuate surface of the second guiding surface in the process of connecting the two housings in the above embodiment, it may slide in contact with both the steep slant and the arcuate surface.
(7) Although the lock portion particularly projects toward the outer surface of the first housing in the above embodiment, it may project inwardly from the plate portion forming the first housing.
(8) The lock portion particularly is a projection in the above embodiment. Instead, a part of the plate portion forming the first housing may be so cut out as to penetrate in a thickness direction, and a part of the plate portion left without being cut out may serve as the lock portion. In this case, the lock portion is accommodated within the thickness range of the plate portion.
(9) In the above embodiment, the lock arm particularly is formed to be resiliently deformed like a seesaw (inclined) by forming the arm portion, which will come into contact with the lock portion, to extend in a cantilever manner from the supporting portion toward the first housing and forming the operating portion to extend in a cantilever manner from the supporting portion to the side opposite to the first housing. However, the lock arm may be formed such that the arm portion, which will come into contact with the lock portion, substantially extends in a cantilever manner from the supporting portion toward the side opposite to the first housing and the operating portion is formed at the extending end of the arm portion.
(10) Although the angle of inclination of the first guiding surface with respect to the connecting direction of the two housings at least partly is about 30° in the above embodiment, it may be larger than 30° or smaller than 30°.
(11) Although the angle of inclination of the steep slant of the second guiding surface with respect to the connecting direction of the two housings at least partly is about 60° in the above embodiment, it may be larger than 60° or smaller than 60°.
(12) Although the angle of inclination of the slide-contact slant with respect to the connecting direction of the two housings at least partly is about 35° in the above embodiment, it may be larger than 35° or smaller than 35°.
(13) Although the slide-contact slant of the lock arm and the lower surface of the arm portion (slide-contact portion) particularly are smoothly connected via the slide-contact curved surface in the above embodiment, they may be connected to each other at an obtuse angle.

### LIST OF REFERENCE NUMERALS

- 10 ...: first housing
- 16 ...: lock portion
- 17 ...: guiding surface
- 17A ...: first guiding surface
- 17B ...: second guiding surface
- 22 ...: steep area
- 30 ...: second housing
- 36 ...: lock arm
- 39 ...: operating portion

## Claims

1. A connector, comprising a first housing (10) connectable along a connecting direction (CD) to a second housing (30) of a mating connector and including a lock portion (16) to engage a lock arm (36) provided at the second housing (30); wherein:
the lock portion (16) is formed with a guiding surface (17) inclined with respect to the connecting direction (CD) of the two housings (10, 30) so that the lock arm (36) is resiliently deformed in an unlocking direction (UD) crossing the connecting direction (CD) of the two housings (10, 30) by sliding in contact with the guiding surface (17) in the process of connecting the two housings (10, 30); and
the guiding surface (17) includes a first guiding surface (17A) arranged in a front area in the connecting direction (CD) to the second housing (30) and a second guiding surface (17B) arranged in an area behind the first guiding surface (17A) in the connecting direction (CD) to the second housing (30) and having a steep area whose angle of inclination (β) with respect to the connecting direction (CD) of the two housings (10, 30) is larger than an angle of inclination (α) of the first guiding surface (17A).

2. A connector according to claim 1, wherein an upper surface (19) of the lock portion (16) substantially is a flat surface parallel to the connecting direction (CD).

3. A connector according to any one of the preceding claims, wherein the angle of inclination (α) of the first guiding surface (17A) with respect to the connecting direction (CD) is less than about 45°.

4. A connector according to any one of the preceding claims, wherein a front end of the second guiding surface is directly connected to the rear end of the first guiding surface (17A) and/or a rear end of the second guiding surface is directly connected to the upper surface (19) of the lock portion (16).

5. A connector according to any one of the preceding claims, wherein the second guiding surface (17B) comprises a steep slant (20) and an arcuate or bent surface (21).

6. A connector according to claim 5, wherein the arcuate or bent surface (21) comprises a steeply curved surface (21A) and a moderately curved surface (21 B), wherein the steeply curved surface (21 A) is an area of the arcuate surface (21) where an angle of inclination of a tangent to the steeply curved surface (21 A) with respect to the connecting direction (CD) is larger than the inclination angle (α) of the first guiding surface (17A).

7. A connector according to claim 6, wherein a curvature of the steeply curved surface (21A) is constant over the entire area of the steeply curved surface (21 A) and/or the front end of the steeply curved surface (21 A) is tangentially connected to the steep slant (20).

8. A connector according to claim 5, 6 or 7, wherein the moderately curved surface (21 B) is an area of the arcuate surface (21) where an angle of inclination of a tangent to the moderately curved surface (21 B) with respect to the connecting direction (CD) is smaller than the inclination angle (α) of the first guiding surface (17A).

9. A connector according to claim 8, wherein a curvature of the moderately curved surface (21 B) is constant over the entire area of the moderately curved surface (21 B) and/or equal to that of the steeply curved surface (21 A).

10. A connector according to claim 8 or 9, wherein a front end of the moderately curved surface (21 B) is tangentially connected to the rear end of the steeply curved surface (21 A), and/or wherein a rear end of the moderately curved surface (21 B) is tangentially connected to the upper surface (19) of the lock portion (16).

11. A connector assembly comprising a connector according to any one of the preceding claims and a mating connector connectable therewith along a connecting direction (CD), wherein:
a lock arm (36) is provided on the second housing (30) and is resiliently deformable in an unlocking direction (UD) crossing the connecting direction (CD); and
the lock arm (36) resiliently returns towards a lock position to be engaged with the lock portion (16), thereby locking the two housings (10, 30) in a connected state, when the two housings (10, 30) reach a properly connected state.

12. A connector assembly according to claim 11, wherein an operating portion (39) is formed on the lock arm (36) to be pressed upon for unlocking the two housings (10, 30), whereby the lock arm (36) is resiliently deformed in the unlocking direction (UD) to be disengaged from the lock portion (16).

13. A connector assembly according to claim 11 or 12, wherein in the process of connecting the two housings (10, 30), a slide-contact area of the second guiding surface (17B) with the lock arm (36) is only a steep area (22).

14. A connector assembly according to claim 11, 12 or 13, wherein:
the lock arm (36) is formed with a locking hole or recess (40),
a part of the lock arm (36) before the locking hole or recess (40) serves as a slide-contact portion (41), and
a rear surface of the slide-contact portion (41) serves as a locking surface (42) substantially perpendicular to the connecting direction (CD).

15. A connector assembly according to any one of the claims 11 to 14, wherein, with the lock arm (36) located at a lock position, an angle of inclination (γ) of a slide-contact slant (44) of the slide-contact portion (41) with respect to the connecting direction (CD) is larger than the angle of inclination (α) of the first guiding surface (17A) and/or smaller than the angle of inclination (β) of the steep slant (20), wherein the angle of inclination (γ) of the slide-contact slant (44) preferably is less than about 50°.
